**Europäisches Patentamt**

(19) **European Patent Office**

**Office européen des brevets**

(11) Veröffentlichungsnummer: **0 156 127**
**B1**

(12) **EUROPÄISCHE PATENTSCHRIFT**

(45) Veröffentlichungstag der Patentschrift:
**22.04.87**

(51) Int. Cl.⁴: **B 65 G 57/112,** B 65 H 31/00

(21) Anmeldenummer: **85101214.6**

(22) Anmeldetag: **06.02.85**

(54) **Palettiervorrichtung.**

(30) Priorität: **27.03.84 DE 3411295**

(43) Veröffentlichungstag der Anmeldung:
**02.10.85 Patentblatt 85/40**

(45) Bekanntmachung des Hinweises auf die Patenterteilung:
**22.04.87 Patentblatt 87/17**

(84) Benannte Vertragsstaaten:
**AT BE CH DE FR GB IT LI LU NL SE**

(56) Entgegenhaltungen:
**DE - A - 3 024 133**

(73) Patentinhaber: **Mohndruck Graphische Betriebe GmbH,
Carl-Bertelsmann-Strasse 161, D-4830 Gütersloh 1 (DE)**

(72) Erfinder: **Kwauka, Gerd-Georg, Dr.-Ing.,
Sebastianweg 15, D-4830 Gütersloh 11 (DE)**

(74) Vertreter: **Patentanwälte Dr. Solf & Zapf,
Schlossbleiche 20 Postfach 13 01 13,
D-5600 Wuppertal 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung zum Palettieren von quaderförmigen Produkten, insbesondere von Buchblocks oder Büchern, mit einer Zuführeinrichtung für die Produkte einer Einrichtung zur Bildung einer Produktreihe u. einer Einrichtung zur Aufnahme einer aus mehreren Produktreihen bestehenden Produktlage, wobei letztere Einrichtung mit einem Antrieb versehen u. vorschiebbar sowie zurückziehbar gelagert ist. Eine derartige Vorrichtung ist aus der DE-A-2718338 bekannt.

Mit dieser bekannten Vorrichtung wird zunächst auf ein Transportband eine Reihe aus einer vorbestimmten Anzahl der Produkte gebildet und die Reihe seitlich auf eine horizontal gelagerte Platte geschoben. Dieser Vorgang wird wiederholt, bis eine sogenannte Lage aus einer bestimmten Anzahl nebeneinander angeordneter Reihen gebildet ist. Die Platte befindet sich über einer Palette, die mit einer entsprechenden Einrichtung auf- und niederfahrbar ist, und wird nach Fertigstellung der Lage in der Lagenebene parallel zur Kante des Transportbandes aus der Lagenposition gezogen, wobei ein stillstehender Abstreifer die Produkte der Lage von der Platte drückt, so dass die Produkte zur Bildung eines Stapels lagenweise direkt auf dem Boden der Palette oder auf der obersten Produktlage abgelegt werden. Mit einer derartigen Vorrichtung kann man zwar Stapel bilden, in denen durch vorheriges Wenden die quaderförmigen Produkte in einzelnen Reihen unterschiedliche Stellungen einnehmen (Verbundstapel), es ist jedoch nicht möglich — wie in vielen Anwendungsfällen erwünscht —, Lücken zwischen Produktreihen vorzusehen. Mit Lücken und mit einem Verbundstapel kann die Standfestigkeit der gestapelten Produkte auf der Palette erhöht werden. Beim Abstreifen einer Produktlage wird Reibung zwischen den Produkten und der Platte erzeugt, die die Qualität empfindlicher Produkte beeinträchtigen kann. Zwischen der Platte und der obersten Produktlage auf der Palette muss ein genügender Abstand vorgesehen sein, damit die Platte beim Zurückziehen nicht mit Produkten auf der Palette in Berührung kommt und den Stapel einreisst. Dieser Abstand kann jedoch das positionsgenaue Ablegen der Produkte auf der obersten Lage beeinträchtigen, weil die Produkte beim Abstreifen den Höhenunterschied überwinden müssen und dabei unkontrolliert verrutschen können, und auch auf den freistehenden Stapel auf der Palette derart einwirken können, dass die obersten Produkte verrutschen oder der Stapel teilweise einbricht. Ein weiterer Nachteil der bekannten Vorrichtung ist, dass die Palette nach jeder Lagenbildung abgesenkt werden muss. Diese Bewegung ist nicht immer erschütterungsfrei, so dass es vorkommen kann, dass der bereits gebildete, relativ hohe, freistehende Stapel, bedingt durch die Erschütterungen, ganz oder teilweise einbricht.

Eine andere, ähnliche Palettierungsvorrichtung arbeitet mit einem vor- und zurück- sowie auf- und abfahrbaren Stapelarm (DE-A-31 39 828), der in jede gewünschte Position über eine Palette gefahren werden kann. Der Stapelarm besteht im wesentlichen aus einem horizontal angeordneten, endlosen Transportband mit einem oberen und unterem Trum, wobei zwischen den Trums eine Platte angeordnet ist, die seitlich aus den Trums vor- und zurückfahrbar gelagert ist. Auf dem Transportband wird zunächst eine Produktreihe, ggf. mit Lücken zwischen den Produkten gebildet. Ein Schieber schiebt die Reihe seitlich vom Transportband auf die herausgefahrene Platte. Die Platte befindet sich über der obersten Reihe der Palette, auf die die auf der Platte befindliche Reihe abgelegt werden soll. Die Platte wird bei stehengebliebenem Schieber zurückgezogen, so dass die Produkte abgestreift werden.

Mit dieser bekannten Palettiervorrichtung kann man zwar im Verbund und auf Lücke stapeln, weil sowohl Lücken in der Reihe als auch durch entsprechendes Verfahren des Stapelarms über der Palette oder der Palette selbst zwischen den Reihen auf der Palette gebildet werden können, das Abstreifen von der Platte kann aber auch die bei der bereits beschriebenen anderen Vorrichtung auftretenden, durch Reibung bedingten Nachteile bedingen. Ausserdem kann auch in diesem Fall das Abstreifen das positionsgenaue Ablegen beeinträchtigen. Hinzu kommt, dass jeweils nur eine Reihe und keine ganze Lage auf der Palette abgelegt werden kann, was die Palettiergeschwindigkeit mindern kann.

Aus der DE-A-30 24 133 ist eine Förder- und/oder Stapelvorrichtung, insbesondere für im einzelnen leichte und leicht verformbare Güter, z.B. Zeitschriften bekannt, die aus einem bewegbaren Transportrahmen mit einem eine Auflagefläche bildenden, flachen, auskragenden Tragelement besteht, welches unter dem abgesetzten Transportgut hervorziehbar ist und das anschliessend wieder in die Tragposition geschoben werden kann. Das Tragelement besteht aus zwei, übereinander angeordneten Stahlplatten, wobei jede Platte mit einem Band überzogen ist und jedes Band am Maschinenrahmen befestigt ist, in dem das Band der oberen Platte im Bereich des oberen Trums und das Band der unteren Platte im Bereich des unteren Trums festsitzt. Beim Zurückziehen des Tragelements wird erreicht, dass die Bänder stillstehen, so dass keine Relativbewegung zwischen der Oberfläche der Tragelemente und dem getragenen Stapel sowie dem Stapel stattfindet, auf dem der getragene Stapel abgelegt werden soll. Die bekannte Vorrichtung ermöglicht, dass das Tragelement vor dem Zurückziehen auf den Stapel, auf den der getragene Stapel abgelegt werden soll, aufgesetzt werden kann, wobei auch eine Pressung des unteren Stapels erzeugt werden kann. Zur lagenweisen Bildung eines Stapels bietet sich die bekannte Vorrichtung nicht ohne weiteres an, weil es schwierig ist, während des Herausfahrens des Tragelements eine Produktlage darauf anzuordnen.

Aufgabe der Erfindung ist, eine Vorrichtung zu schaffen, mit der die Produkte lagenweise, ggf. auf Lücke, sehr genau positioniert auf eine Palette gelegt werden können, ohne dass die Produkte verrutschen können und der bereits gebildete Stapel gefährdet wird.

Diese Aufgabe wird durch die Merkmale des Anspruchs 1 gelöst. Vorteilhafte Weiterbildungen der Erfindung sind Gegenstand der Unteransprüche. Anhand der Zeichnung, in der ein Ausführungsbeispiel abgebildet ist, wird die Erfindung im folgenden näher erläutert. Es zeigen:

Fig. 1 schematisch und perspektivisch eine erfindungsgemässe Vorrichtung zum Palettieren;

Fig. 2 schematisch eine Seitenansicht eines Doppelwälzbandes;

Fig. 3 schematisch einen Antrieb des Doppelwälzbandes;

Fig. 4 schematisch eine besondere Anordnung der Vorderkante des Doppelwälzbandes.

Nach der Erfindung wird auf einem Einfach- oder Doppelwälzband 1 eines Stapelarmes 2 eine Produktlage gebildet und die Lage durch Zurückziehen des Wälzbandes auf eine unter dem Wälzband befindliche Palette 3 abgelegt. Das Einfachwälzband ist nicht gesondert abgebildet. Es entspricht dem Doppelwälzband 1 mit Ausnahme des Unterbandes 19, das fehlt. Die Funktion des Einfachwälzbandes entspricht dem Oberband 18.

Der Stapelarm 2 ist vorzugsweise auf- und abfahrbar angeordnet und weist im wesentlichen, ausser dem ebenfalls horizontal angeordneten Doppelwälzband 1, zweckmässigerweise ein endloses, in an sich bekannter Weise antreibbares Transportband 4 auf, mit einem oberen Trum 5 und einem unteren Trum 6 sowie einer, in Transportrichtung des Produkts betrachtet (Pfeil 10), ersten Umlenkrolle 7 und einer zweiten Umlenkrolle 8. Im Bereich der ersten Umlenkrolle 7 steht der Stapelarm 2 zweckmässigerweise mit einem Zuführband 9 gelenkig in Verbindung, das dem Transportband 4 vorgeordnet ist und Produkte in Transportrichtung (Pfeil 10) an das Transportband 4 übergeben kann. Den Zwischenraum 13 zwischen dem oberen Trum 5 und dem unteren Trum 6 des Transportbandes 4, dessen Höhe beliebig hoch sein kann, weil sich darunter keine Palette befindet, durchgreift das Doppelwälzband 1, das in Pfeilrichtung 11 vor- und zurückfahrbar gelagert ist, wobei sich der Stapelort 12 unter dem Doppelwälzband, jedoch seitlich vor dem Transportband 4 befindet. Aus dieser Anordnung resultiert, dass die Dicke des Transportbandes 4 bzw. die Höhe des Zwischenraums 13 nicht kritisch ist; denn das Transportband 4 befindet sich beim Stapeln nicht über der Palette 3. Über die Palette 3 wird lediglich das Doppelwälzband 1 gefahren, dessen Breite 15 und Nutzlänge 14 derart gewählt sind, dass das Doppelwälzband die Palette 3 vollständig übergreifen kann. Das Doppelwälzband 1 ist ausserdem derart angeordnet, dass es so weit zurückgezogen werden kann, dass seine Vorderkante 16 etwa mit dem Seitenkantenbereich 17 des Transportbandes 4 fluchtet.

Das Doppelwälzband 1 besteht aus einem endlosgeführten Oberband 18 und einem direkt darunter angeordneten endlosgeführten Unterband 19. Wesentlich ist, dass die Bänder 18, 19 gegenläufig, jedoch mit gleicher Geschwindigkeit antreibbar ausgebildet und derart gelagert sind, dass zumindest die vorderen Umlenkrollen 20, 23 der Bänder 18, 19 gemeinsam vorgeschoben und zurückgezogen werden können, wobei beim Zurückziehen der obere Trum 26 des Oberbandes 18 und der Untertrum 27 des Unterbandes 19 abgewälzt werden, während die Bänder 18, 19 beim Vorschieben des Doppelwälzbandes 1 relativ dazu stillstehen und nicht angetrieben werden.

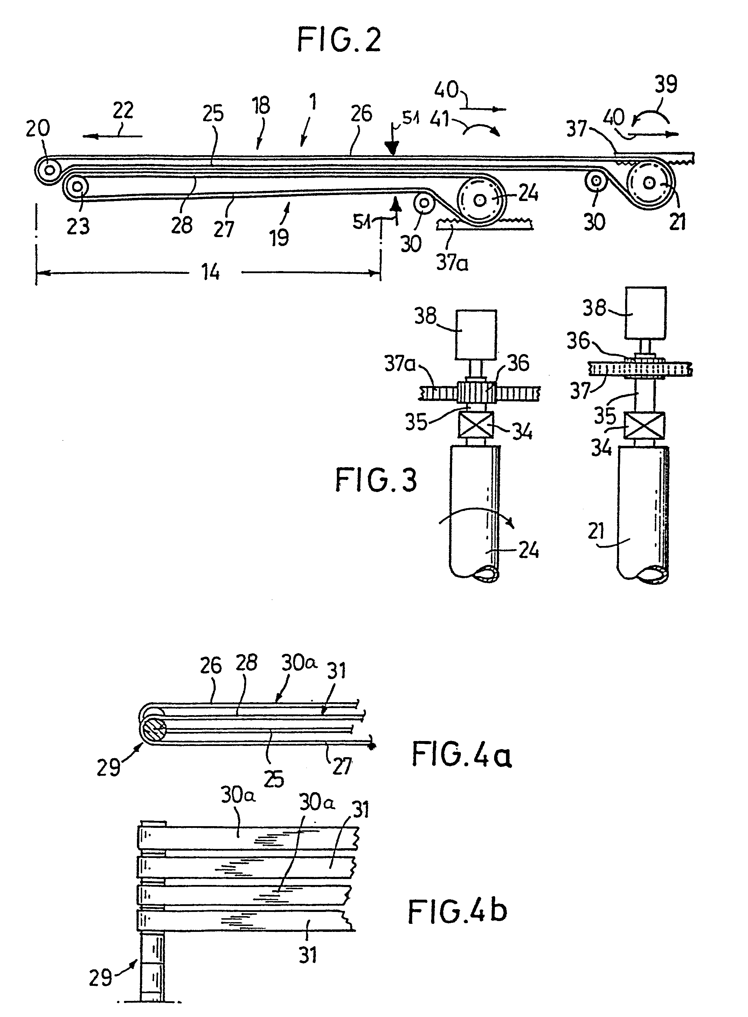

Eine zweckmässige Ausführungsform des Doppelwälzbandes 1 zeigt schematisch Figur 2 von der Seite. Das Oberband 18 wird über eine vordere Umlenkrolle 20 und eine hintere Umlenkrolle 21 geführt. Das Unterband 19 läuft über die vordere Umlenkrolle 23 und über die hintere Umlenkrolle 24. Die Rollen 23 und 24 sind unterhalb zwischen den Rollen 20 und 21 angeordnet, wobei der Untertrum 27 des Unterbandes 19 den Untertrum 25 bzw. die Umlenkrolle 20 des Oberbandes 18 nach unten überragt, und sich die Rolle 24 ausserhalb des Bereichs der Nutzlänge 14 befindet. Um zu gewährleisten, dass das Doppelwälzband 1 im Bereich der Nutzlänge 14 möglichst dünn ist, sind die Bänder 18, 19 so ineinander gesetzt, dass der Untertrum 25 des Oberbandes 18, der beim Zurückziehen des Doppelwälzbandes und Antrieb der Bänder die gleiche Laufrichtung wie der Obertrum 28 des Unterbandes 19 hat, vom Obertrum 28 auf der gesamten Länge dieses Trums hochgedrückt wird, wobei sich die vordere Umlenkrolle 23 so nahe wie möglich hinter der Umlenkrolle 20 befindet, und die vorderen Umlenkrollen 20 und 23 im Durchmesser so klein wie möglich gehalten sind. Die hinteren Umlenkrollen 21 und 24 weisen dagegen, wie abgebildet, vorzugsweise einen grösseren Durchmesser auf, um einen sicheren Antrieb der Bänder zu gewährleisten. Für diesen Zweck sind den hinteren Rollen 21 und 24 Spannrollen 30 unmittelbar nachgeordnet, die jeweils unter den Untertrum 25, 27 greifen und ihn nach oben drücken bzw. umlenken, so dass die Trums der Bänder 18, 19 parallel laufen und der Abstand zwischen dem Obertrum 26 und dem Untertrum 27 äusserst gering ist.

Die Bänder 18, 19 sind vorzugsweise vollflächige Bänder. Es kann aber auch zweckmässig sein, insbesondere das Unterband 19 aus parallel zueinander angeordneten und geführten einzelnen Riemen zusammenzustellen, die über einzelne vordere Umlenkrollen 23 geführt werden.

Nach einer anderen Ausführungsform der Erfindung ist anstelle der vorderen Umlenkrollen 20, 23 lediglich ein einziges Umlenkprofil 29 vorgesehen (Figur 4), das aus einem reibungsarmen Material besteht und gerundete Vorderkanten aufweist. Über das Umlenkprofil 29 werden schmale Riemen 30a, 31 geführt, wobei die Riemen 30a das Oberband 18 und die Riemen 31 das Unterband 19 bilden. Seitlich neben jeweils einem Riemen 30a befindet sich ein Riemen 31, wobei die halbkreisförmige Führungsbahn der Riemen 31 jeweils stufenförmig gekröpft tiefer gesetzt ist, so dass die Untertrums 27 der Riemen 31 die Untertrums 25 der Riemen 30a nach unten überragen. Die Riemen 30a, 31 gleiten lediglich über das Umlenkprofil 29, das sich selbst nicht dreht. Mit einem derartigen Umlenkprofil kann ebenfalls ein sehr geringer Abstand zwischen den Obertrums 26 der Riemen 30a und den Untertrums 27 der Riemen 31 bewirkt werden.

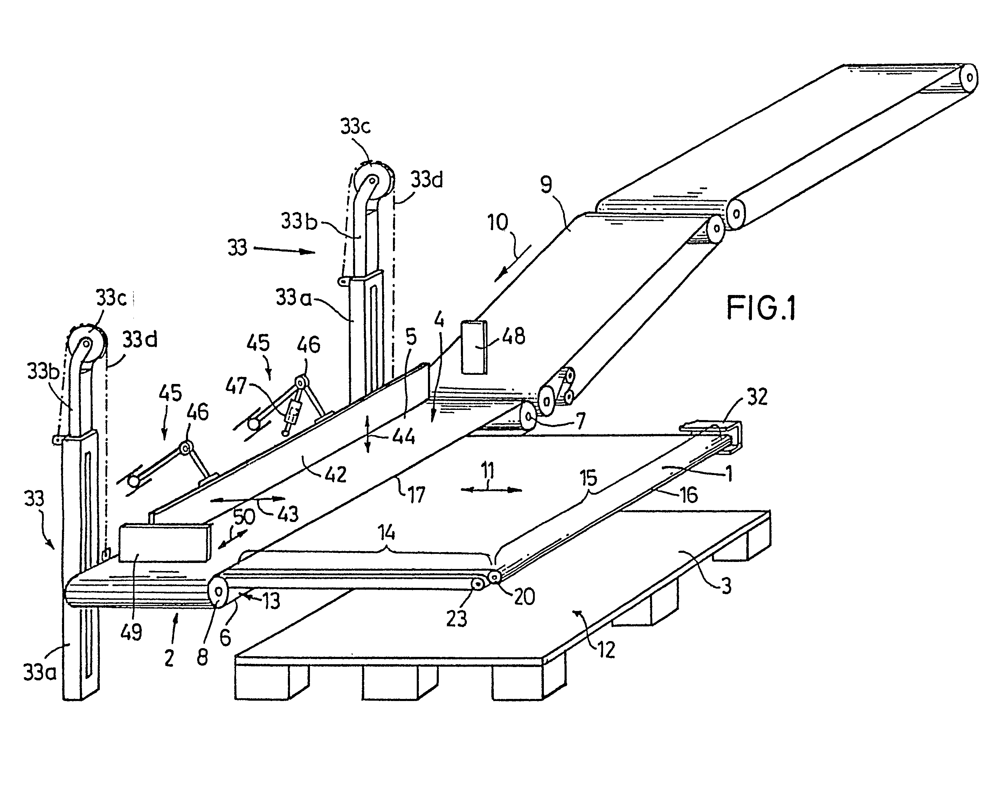

Die vorderen Umlenkrollen 20 und 23 bzw. das Umlenkprofil 29 sowie die Rollen 21, 24 und 30 lagern mit zum Beispiel entsprechenden endseitigen Rollen oder dgl. in an sich bekannter Weise seitlich rechts und links in einer Schiene 32, von der nur ein Bruchteil in Figur 1 dargestellt ist, um die Übersichtlichkeit der Zeichnung nicht zu stören. Die Schienen 32 sind am Tragarm 2 befestigt bzw. sitzen zusammen mit dem Tragarm 2 an in Figur 1 abgebildeten Teleskopsäulen 33, deren Aufgabe und Funktion weiter unten erläutert wird.

Um das Abwälzen des Obertrums 26 und des Untertrums 27 beim Zurückziehen des Doppelwälzbandes zu gewährleisten und um zu gewährleisten, dass das Oberband 18 und das Unterband 19 beim Vorschieben des Doppelwälzbandes relativ dazu stillstehen, ist nach dem in Figur 3 schematisch dargestellten Beispiel vorgesehen, die hinteren Umlenkrollen 21 und 24 über einen Freilauf oder eine Kupplung 34 mit jeweils ihrer Achse 35 zu verbinden, wobei auf zumindest einem freien seitlichen Ende der Achsen 35 ein Ritzel bzw. Zahnrad 36 befestigt steckt. Die Zahnräder 36 greifen je in eine horizontal angeordnete, feststehende Zahnstange 37, 37a, die z.B. in den Schienen 32 sitzen (nicht dargestellt), wobei die Zahnstange 37 über der Achse 35 der Rolle 21 und die Zahnstange 37a unter der Achse 35 der Rolle 24 angeordnet ist. Zumindest ein Zahnrad 36 steht mit einem Antrieb, z.B. der Antriebswelle eines Motors 38 in Verbindung, wobei die Rollen 20, 21 bzw. das Umlenkprofil 29 sowie die Rollen 23, 24 und 30 derart, vorzugsweise starr, miteinander gekoppelt sind, dass ihr Abstand beim Verschieben des Doppelwälzbandes 1 in den Schienen 32 konstant bleibt.

Beim Zurückziehen des Doppelwälzbandes in Pfeilrichtung 40, das durch den Antrieb 38 bewirkt werden kann, wird die Rolle 21 in Pfeilrichtung 39 gedreht, weil der Freilauf gesperrt ist bzw. die Kupplung 34 im Eingriff steht. Dabei stehen die Produkte auf dem Obertrum 26 still. Die Rolle 24 dreht sich in äquivalenter Weise entgegengesetzt in Pfeilrichtung 41, so dass der Untertrum 27 gegenüber dem Stapelort 12 stillsteht.

Beim Vorschieben des Doppelwälzbandes 1 sollen sich die beiden Bänder 18 und 19 relativ dazu nicht bewegen, d.h. sie sollen nicht angetrieben werden, wenn das Doppelwälzband 1 nach vorne versetzt wird. Dies wird durch den Freilauf bzw. die Kupplung 34 erreicht, die ausser Eingriff stehen, so dass lediglich die Achsen 35 sich drehend translatorisch bewegt werden, ohne dass sich die hinteren Umlenkrollen 21, 24 drehen. Selbstverständlich sind auch andere als die beschriebenen bevorzugten Antriebsmittel verwendbar, die gewährleisten, dass die Bänder 18, 19 beim Zurückziehen unter Abwälzung der Trums 26 und 27 angetrieben werden und beim Vorschieben des Doppelwälzbandes 1 stillstehen.

Bei einer besonders zweckmässigen Ausführungsform der Erfindung ist der Stapelarm 2 an Teleskopsäulen 33 auf- und abfahrbar gelagert. Die Teleskopsäulen sind auf Abstand voneinander angeordnet und befinden sich seitlich neben dem Transportband 4 jeweils im Bereich der Achsen der Umlenkrollen 7 und 8. Die Achsen dieser Umlenkrollen lagern in z.B. Traversen, an denen auch die Schienen 32 sitzen können (nicht dargestellt), wobei die Traversen an den Teleskopsäulen 33 auf- und abfahrbar geführt sind, z.B. mit Gleitstükken in vertikal verlaufenden Nuten der Säulenstükke 33b. Wie an sich bekannt, stecken in den Hohlsäulenstücken 33a Säulenstücke 33b auf- und abfahrbar. Auf den freien Enden der Säulenstücke 33b befindet sich je eine um eine horizontale Achse drehbare Rolle 33c, über die ein Seil 33d geführt wird, das mit einem Ende am Hohlsäulenstück 33a und mit dem anderen Ende am Stapelarm 2, z.B. an der Traverse befestigt ist. Die Säulen können auf einer fahrbaren Lafette montiert sein (nicht dargestellt), so dass die Palettiervorrichtung ohne weiteres versetzt werden kann. Die Teleskopsäulen 33 ergeben eine geringe Bauhöhe der Palettiervorrichtung und bieten zwischen sich ausreichend Raum, in den das Doppelwälzband 1 beim Zurückziehen geschoben werden kann. Demgemäss durchgreifen die Schienen 32 den Zwischenraum zwischen den Teleskopsäulen 33 (nicht dargestellt).

Zur Verminderung des Platzbedarfs können die Schienen 32 zwischen den Teleskopsäulen 33 nach unten gebogen sein, so dass das Doppelwälzband beim Zurückziehen, z.B. bei feststehenden Rollen 30 und entsprechenden Führungsrollen oder gleichartigen Gleitmitteln, die den Abstand zwischen den Trums konstant halten, nach unten geführt werden kann.

Anstelle der Teleskopsäulen ist nach einer weiteren Ausführungsform der Erfindung direkt unter dem Stapelarm 2 ein, vorzugsweise fahrbarer, Scherenhubtisch bekannter Bauart angeordnet, der den Stapelarm 2 mit dem Doppelwälzband 1 und ggf. dem Zuführband 9 in geeigneter Weise trägt. Diese Version der Lagerung des Stapelarms ist nicht gesondert dargestellt, weil Scherenhubtische an sich bekannt sind. Der Scherenhubtisch verringert den Platzbedarf der Palettiervorrichtung und gewährleistet eine sehr genaue Höhenverstellung des Stapelarms 2.

Nach der Erfindung befindet sich über dem oberen Trum 5 des Transportbandes 4 ein sich in Längsrichtung des Bandes erstreckender Schieber 42, der in an sich bekannter Weise in Pfeilrichtung 43 vor- und zurück- und in Pfeilrichtung 44 auf- und abschiebbar geführt ist. Für das Vor- und Zurückschieben dienen vorzugsweise Kniehebeleinrichtungen 45, die sich mit ihrem einen Ende an einem festen Ort des Stapelarms 2 und am anderen Ende am Schieber 42 abstützen, wobei auf das Glied 45 der Kniehebeleinrichtung je ein Antriebsmittel, z.B. eine Kolbenzylinderanordnung 47, zum Strecken und Knicken der Kniehebel wirkt. Dieser Kniehebelantrieb sorgt für eine verzögerte Abschiebebewegung, so dass die auf dem oberen Trum 5 des Bandes 4 befindlichen Produkte mit sanfter Verzögerung auf das Doppelwälzband 1 geschoben werden können.

Die Lückenbildung in einer Reihe der Produkte kann in an sich bekannter Weise mit einem Stopper bewirkt werden, der im Bereich des Übergangs zwischen dem Zuführband 9 und dem Transportband 4 des Stapelarms 2 angeordnet wird. Es kann aber auch eine stopperlose Lückenbildung vorgesehen sein, wobei eine Fotozelle 48 im Bereich des Übergangs zwischen dem Zuführband 9 und dem Transportband 4 über den Bändern positioniert ist. Die Fotozelle 48 registriert ankommende Produkte und steuert die Geschwindigkeit des Transportbandes 4 in Kombination mit der des Zuführbandes 9 derart, dass genaue Abstände zwischen den Produkten hergestellt werden können.

Wenn keine Lückenbildung gewünscht ist, werden die Produkte gegen einen Anschlag 49 transportiert, der in Pfeilrichtung 50 verstellbar über dem Obertrum 5 des Transportbandes 4 angeordnet ist, und durch eine Dämpfungseinrichtung den Aufprall der Produkte mindert. Die Lückenbildung zwischen den Reihen einer Lage erfolgt durch die vorwählbare Vorschubstrecke des Doppelwälzbandes 1 beim Vorschieben.

Die neue Palettiervorrichtung arbeitet wie folgt. Vom Zuführband 9 werden Produkte in Reihe antransportiert und eine bestimmte Anzahl davon auf das Transportband 4 befördert. Das Doppelwälzband 1 befindet sich in einer rückwärtigen Stellung und ragt z.B. nur um etwa eine Produktreihenbreite aus dem Transportband 4 hervor. Der Schieber 42 schiebt die Reihe vom Transportband 4 auf das Doppelwälzband 1 und wird zurückgeholt, wobei bereits eine weitere Reihe gebildet werden kann, wenn der Schieber nach oben und nach hinten und dann wieder nach unten bewegt wird. Das Doppelwälzband 1 wird um eine betimmte Strecke vorgeschoben, so dass Platz für die nächste Reihe auf dem Doppelwälzband 1 geschaffen wird. Das Vorschieben geschieht vorzugsweise synchron mit der Aufschiebebewegung des Schiebers 42, so dass keine Relativbewegung zwischen den Produkten und dem Wälzband erzeugt wird. In dieser beschriebenen Weise wird eine Lage der Produkte mit oder ohne Lücken gebildet. Ist die Lage vollständig, wird das Doppelwälzband 1 zurückgezogen, wobei die Trums 26 und 27 abwälzen. Es findet somit keinerlei Relativbewegung zwischen dem Trum 26 und den Produkten statt. Da auch der Trum 27 stillsteht, kann das Doppelwälzband 1 beim Zurückziehen auf die oberste Lage der Palette aufgesetzt werden, so dass der Abstand zwischen der neu aufzulegenden Lage und der obersten Palettenlage optimal gering ist. Ausserdem wird durch das Aufsetzen des Doppelwälzbandes auf den Stapel der Stapel gehalten. Beim Vorschieben wird das Doppelwälzband entweder so weit angehoben, dass der Untertrum 27 die oberste Lage nicht berührt oder vorzugsweise das Unterband derart angetrieben wird, dass der Untertrum 27 auch beim Vorschieben gewälzt wird. In letzterem Fall kann das Doppelwälzband 1 in einer Höhe über der letzten Lage der Palette positioniert werden, in der der Untertrum 27 sich beim Vorschieben des Doppelwälzbandes 1 sich nach unten abwälzend auf die oberste Lage der Palette legt.

Es liegt im Rahmen der Erfindung, die beschriebene Doppelwälzbandeinrichtung mit anderen Zuführeinrichtungen zu kombinieren, die eine Produktreihe bilden und eine Vorrichtung aufweisen, mit der die Reihe positionsgenau auf das Doppelwälzband gebracht werden kann. Der Begriff „Doppelwälzband" beinhaltet im Rahmen der Erfindung nicht nur Bänder, sondern auch gleichwirkende Transportmittel, wie z.B. Röllchenbahnen, Stangenbahnen oder dgl.

## Patentansprüche

1. Vorrichtung zum Palettieren von quaderförmigen Produkten, insbesondere von Buchblocks oder Büchern, mit einer Zuführeinrichtung (9) für die Produkte, einer Einrichtung zur Bildung einer Produktreihe und einer Einrichtung zur Aufnahme einer aus mehreren Produktreihen bestehenden Produktlage, wobei letztere Einrichtung mit einem Antrieb versehen und vorschiebbar sowie zurückziehbar gelagert ist, dadurch gekennzeichnet, dass die Einrichtung zur Aufnahme einer Produktlage aus einem Einfachwälzband oder einem Doppelwälzband (1) besteht, wobei das Doppelwälzband (1) ein endlos geführtes Oberband (18) und ein direkt darunter angeordnetes endlos geführtes Unterband (19) aufweist und die Bänder (18, 19) beim Zurückziehen gegenläufig antreibbar sind, derart, dass die Produkte auf dem oberen Trum (26) des Oberbandes (18) und der Untertrum (27) des Unterbandes (19) gegenüber dem Stapelort (12) stillstehen und dass zumindest das Oberband (18) beim Vorschieben des Doppelwälzbandes (1) stillsteht.

2. Vorrichtung nach Anspruch 1, dadurch gekennzeichnet, dass beim Vorschieben des Doppelwälzbandes (1) auch das untere Band (19) stillsteht.

3. Vorrichtung nach Anspruch 1 oder 2, dadurch gekennzeichnet, dass das Oberband (18) des Doppelwälzbandes (1) über eine vordere Umlenkrolle (20) und eine hintere Umlenkrolle (21) geführt wird und das Unterband (19) über die vordere Umlenkrolle (23) und über die hintere Umlenkrolle (24) läuft, wobei die Rollen (23 und 24) unterhalb zwischen den Rollen (20 und 21) angeordnet sind und der Untertrum (27) des Unterbandes (19) den Untertrum (25) bzw. die Umlenkrolle (20) des Oberbandes (18) nach unten überragt und sich die Rolle (24) ausserhalb des Bereichs der Nutzlänge (14) des Doppelwälzbandes (1) befindet.

4. Vorrichtung nach Anspruch 3, dadurch gekennzeichnet, dass die Bänder (18, 19) ineinander gesetzt sind, wobei der Untertrum (25) des Oberbandes (18) vom Obertrum (28) des Unterbandes (19) auf der gesamten Länge dieses Trums hochgedrückt wird und sich die vordere Umlenkrolle (23) unmittelbar hinter der vorderen Umlenkrolle (20) befindet.

5. Vorrichtung nach Anspruch 3 oder 4, dadurch gekennzeichnet, dass die hinteren Umlenkrollen (21 und 24) einen grösseren Durchmesser aufweisen als die vorderen Umlenkrollen (20 und 23), und dass den hinteren Umlenkrollen (21 und 24) Spannrollen (30) unmittelbar nachgeordnet sind, die jeweils unter den Untertrum (25, 27) greifen und ihn nach oben umlenken.

6. Vorrichtung nach einem oder mehreren der Ansprüche 3 bis 5, dadurch gekennzeichnet, dass anstelle der vorderen Umlenkrollen (20, 23) ein Umlenkprofil (29) vorgesehen ist, über das schmale Riemen (30a, 31) geführt sind, wobei die Riemen (30a) das Oberband (18) und die Riemen (31) das Unterband (19) bilden und die halbkreisförmigen Führungsbahnen der Riemen (31) jeweils stufenförmig gekröpft tiefer gesetzt sind, so dass die Untertrums (27) der Riemen (31) die Untertrums (25) der Riemen (30a) nach unten bzw. die Obertrums (26) die Obertrums (28) überragen.

7. Vorrichtung nach einem oder mehreren der Ansprüche 3 bis 6, dadurch gekennzeichnet, dass die vorderen Umlenkrollen (20 und 23) bzw. das Umlenkprofil (29) sowie die Rollen (21, 24 und 30) jeweils seitlich, vor- und zurückgleitbar in einer Schiene (32) sitzen, wobei die Schienen (32) die Konstruktion des Doppelwälzbandes (1) tragen.

8. Vorrichtung nach einem oder mehreren der Ansprüche 1 bis 7, dadurch gekennzeichnet, dass die angetriebenen Umlenkrollen des Doppelwälzbandes (1) einen Freilauf und/oder eine Kupplung (34) aufweisen, mit denen sie jeweils mit ihrer Achse (35) derart verbunden sind, dass beim Zurückziehen des Doppelwälzbandes (1) die Umlenkrollen angetrieben werden und beim Vorschieben des Doppelwälzbandes (1) relativ stillstehen.

9. Vorrichtung nach Anspruch 8, dadurch gekennzeichnet, dass zumindest auf einem freien seitlichen Ende der Achsen (35) der hinteren Umlenkrollen (21 und 24) ein Zahnrad (36) befestigt steckt, die Zahnräder (36) je in eine horizontal angeordnete feststehende Zahnstange (37, 37a) greifen, die z.B. in den Schienen (32) sitzen, wobei die Zahnstange (37) über der Achse (35) der hinteren Umlenkrolle (21) und die Zahnstange (37a) unter der Achse (35) der hinteren Umlenkrolle (24) angeordnet sind, und zumindest ein Zahnrad (36) mit einem Antrieb z.B. der Antriebswelle eines Motors (38) in Verbindung steht, und die vorderen Umlenkrollen (20, 23) bzw. das Umlenkprofil (29) sowie die Rollen (23, 24 und 30) derart, vorzugsweise starr, miteinander gekoppelt sind, dass ihr Abstand beim Verschieben des Doppelwälzbandes (1) in den Schienen (32) konstant bleibt.

10. Vorrichtung nach einem oder mehreren der Ansprüche 1 bis 9, dadurch gekennzeichnet, dass das Doppelwälzband (1) zwischen den Trums (5 und 6) eines Transportbandes (4) eines hin- und her sowie auf- und abfahrbaren Stapelarms (2) angeordnet ist.

11. Vorrichtung nach Anspruch 10, dadurch gekennzeichnet, dass der Stapelarm (2) an auf Abstand voneinander angeordneten Teleskopsäulen (33) auf- und abfahrbar gelagert ist und sich die Teleskopsäulen (33) seitlich neben dem Transportband (4) jeweils im Bereich der Achsen der Umlenkrollen (7 und 8) befinden.

12. Vorrichtung nach Anspruch 11, dadurch gekennzeichnet, dass die Achsen der Umlenkrollen (7 und 8) in z.B. Traversen lagern, an denen auch die Schienen (32) des Doppelwälzbandes (1) sitzen, und die Traversen an den Teleskopsäulen (33) auf- und abfahrbar geführt sind.

13. Vorrichtung nach einem oder mehreren der Ansprüche 10 bis 12, dadurch gekennzeichnet, dass in den Hohlsäulenstücken (33a) der Teleskopsäulen (33) Säulenstücke (33b) auf- und abfahrbar stecken, auf den freien Enden der Säulenstücke (33b) sich je eine um eine horizontale Achse drehbare Rolle (33c) befindet, über die ein Seil (33d) oder Kette oder dgl. geführt wird, das mit einem Ende am Hohlsäulenstück (33a) und mit dem anderen Ende am Stapelarm (2) z.B. an der Traverse befestigt ist.

14. Vorrichtung nach Anspruch 10, dadurch gekennzeichnet, dass direkt unter dem Stapelarm (2) ein vorzugsweise fahrbarer Scherenhubtisch angeordnet ist, der den Stapelarm (2) mit dem Doppelwälzband (1) trägt.

15. Vorrichtung nach einem oder mehreren der Ansprüche 10 bis 14, dadurch gekennzeichnet, dass über dem oberen Trum (5) des Transportbandes (4) ein sich in Längsrichtung des Bandes erstreckender Schieber (42) angeordnet ist, der in an sich bekannter Weise in Pfeilrichtung (43) vor- und zurück- und in Pfeilrichtung (44) auf- und abschiebbar geführt ist.

16. Vorrichtung nach Anspruch 15, dadurch gekennzeichnet, dass für das Vor- und Zurückschieben des Schiebers (42) eine Kniehebeleinrichtung (45) vorgesehen ist, die sich mit ihrem einen Ende an einem festen Ort des Stapelarms (2) und am anderen Ende am Schieber (42) abstützt, wobei auf das Glied (45) der Kniehebeleinrichtung ein Antriebsmittel z.B. eine Kolbenzylinderanordnung (47) einwirkt.

17. Vorrichtung nach einem oder mehreren der Ansprüche 10 bis 16, dadurch gekennzeichnet, dass dem Transportband (4) ein Zuführband (9) vorgeordnet ist und zwischen dem Zuführband (9) und dem Transportband (4) eine Einrichtung zur Steuerung der Geschwindigkeit der Bänder und der Registrierung eines Produkts zugeordnet ist.

18. Vorrichtung nach Anspruch 17, dadurch gekennzeichnet, dass die Steuereinrichtung eine Photozelle (48) beinhaltet.

19. Vorrichtung nach einem oder mehreren der Ansprüche 10 bis 18, dadurch gekennzeichnet, das im Bereich der zweiten Umlenkrolle (8) quer über dem oberen Trum (5) des Transportbandes (4) ein in Pfeilrichtung (50) verstellbarer, vorzugsweise mit einer Dämpfungseinrichtung versehener Anschlag (49) angeordnet ist.

20. Vorrichtung nach einem oder mehreren der Ansprüche 1 bis 19, dadurch gekennzeichnet, dass die Doppelwälzbandeinrichtung aus Röllchenbahnen besteht.

21. Vorrichtung nach einem oder mehreren der Ansprüche 1 bis 20, dadurch gekennzeichnet, dass die Doppelwälzbandeinrichtung aus Stangenbahnen besteht.

22. Vorrichtung nach einem oder mehreren der Ansprüche 3 bis 21, dadurch gekennzeichnet, dass die Doppelwälzbandeinrichtung flexibel ausgebildet ist derart, dass das Doppelwälzband ausserhalb des Stapelortes nach oben oder unten gelenkt werden kann.

## Claims

1. Apparatus for palletizing parallelepipedic products, more particularly blocks of books or individual books, the apparatus comprising: a feeder (9) for the products; means for forming a row of products; and means for receiving a layer of products consisting of a number of such rows, the latter means having a drive and being so mounted as to be adapted to move forwards and to be drawn back, characterised in that the means for receiving a layer of products comprise a single endless belt or a double endless belt (1), the double endless belt (1) having an endless top belt (18) and, disposed immediately therebelow, and endless bottom belt (19), the belts (18, 19) being drivable in opposite directions in the drawing-back, so that the bottom run (27) of the bottom belt (19) and the products on the top run (26) of the top belt (18) are stationary relatively to the stacker and at least the top belt (18) is stationary during the advance of the double belts (1).

2. An apparatus according to claim 1, characterised in that the bottom belt (19) too is stationary during the advance of the double belt (1).

3. An apparatus according to claim 1 or 2, characterised in that the top belt (18) of the double belt (1) runs over a front reversing roller (20) and a rear reversing roller (21) and the bottom belt (19) runs over a front reversing roller (23) and a rear reversing roller (24), the rollers (23, 24) being disposed below and between the rollers (20 and 21), the bottom run (27) of the bottom belt (19) extending downwardly below the bottom run (25) or reversing roller (20) of the top belt (18), the roller (24) being outside the range of the effective length (14) of the double belt (1).

4. An apparatus according to claim 3, characterised in that the belts (18, 19) are disposed one inside another, the bottom run (25) of the top belt (18) being pressed upwardly by the top run (28) of the bottom belt (19) over the whole length of this run, the front reversing roller (23) being disposed immediately after the front reversing roller (20).

5. An apparatus according to claim 3 or 4, characterised in that the rear reversing rollers (21, 24) are of greater diameter than the front reversing rollers (20, 23) and idler rollers (30) are disposed immediately after the rear reversing rollers (21, 24), engage below the respective bottom run (25, 27) and deflect the same upwardly.

6. An apparatus according to one or more of claims 3-5, characterised in that instead of the front reversing rollers (20, 23) a reversing section member (29) is provided over which narrow belts (30a, 31) run, the belts (30a) forming the top belt (18) while the belts (31) form the bottom belt (19), the semicircular guide ways of the belts (31) each being disposed lower in a stepped offset relationship so that the bottom runs (27) of the belts (31) extend below the bottom runs (25) of the belts (30a) and the top runs (26) of the belts (30a) extend above the top runs (28) of the belts (31).

7. An apparatus according to one or more of claims 3-6, characterised in that the front reversing rollers (20, 23) or the reversing section member (29) and the rollers (21, 24, 30) are each so disposed in a bar as to be slidable laterally, forwards and backwards, the bars (32) supporting the structure of the double belt (1).

8. An apparatus according to one or more of claims 1-7, characterised in that the driven reversing rollers of the double belt (1) have a freewheel and/or a clutch (34) so connecting them to their respective shaft (35) that the reversing rollers are driven in the drawing-back of the double belt (1) and are relatively stationary during the advance thereof.

9. An apparatus according to claim 8, characterised in that a gear (36) is secured at least to one free lateral end of the shafts (35) of the rear reversing rollers (21, 24), the gears (36) each engage in a stationary horizontal rack (37, 37a), the racks being disposed, for example, in the bars (32), the rack (37) being disposed above the shaft (35) of the rear reversing roller (21) while the rack (37a) is disposed below the shaft (35) of the rear reversing roller (24), and at least one gear (36) is connected to a drive, for example, the drive shaft of a motor (38) and the front reversing rollers (20, 23) or the reversing section member (29) and the rollers (23, 24, 30) are so coupled together, preferably rigidly, that their spacing remains constant when the double belt (1) shifts in the bars (32).

10. An apparatus according to one or more of claims 1-9, characterised in that the double belt (1) is disposed between the runs (5 and 6) of a conveyor belt (4) of a horizontally and vertically reciprocable stacking arm (2).

11. An apparatus according to claim 10, characterised in that the stacking arm (2) is mounted for vertical reciprocation on spaced-apart telescopic columns (33) and the same are disposed laterally of and adjacent the conveyor belt (4) near the shafts of the reversing rollers (7, 8).

12. An apparatus according to claim 11, characterised in that the shafts of the reversing rollers (7, 8) are mounted, for example, in cross-members on which the bars (32) of the double belt (1) are mounted, and the cross-members are guided for vertical reciprocation on the telescopic columns (33).

13. An apparatus according to one or more of claims 10-12, characterised in that column parts (33*b*) engage for vertical reciprocation in the hollow column parts (33*a*) of the telescopic columns (33), a roller (33*c*) rotatable around a horizontal axis is disposed at the free ends of each of the column parts (33*b*) and a cable (33*d*) or chain or the like runs around the roller (33*c*), has one end secured to the hollow column part (33*a*) and has its other end secured to the stacking arm (2), for example, to the cross-member.

14. An apparatus according to claim 10, characterised in that a preferably mobile scissors type lifting table is disposed immediately below the stacking arm (2) and carries the same with the double belt (1).

15. An apparatus according to one or more of claims 10-14, characterised in that a pusher (42) extending lengthwise of the belt (4) is disposed above the top run (5) thereof and is so guided in known manner as to be able to move forwards and backwards in the direction indicated by arrows (43) and to move up and down in the direction indicated by arrows (44).

16. An apparatus according to claim 15, characterised in that a toggle mechanism (45) is provided to advance and withdraw the pusher (42), bears at one end on a stationary part of the stacking arm (2) and bears at its other end on the pusher (42), drive means such as a reciprocating actuator facility (47) being operative on the link (45) of the toggle mechanism.

17. An apparatus according to one or more of claims 10-16, characterised in that a feeder belt (9) is disposed before the conveyor belt (4) and means for controlling the speed of the belts and for recording a product are disposed between the feeder belt (9) and the conveyor belt (4).

18. An apparatus according to claim 17, characterised in that the control means comprise a photocell (48).

19. An apparatus according to one or more of claims 10-18, characterised in that an abutment (49) adjustable in the direction indicated by arrows (50) and preferably having damping means is disposed near the second reversing roller (8) transversely above the top run (5) of the conveyor belt (4).

20. An apparatus according to one or more of claims 1-19, characterised in that the double belt facility is in the form of roller ways.

21. An apparatus according to one or more of claims 1-20, characterised in that the double belt conveyor is in the form of bar ways.

22. An apparatus according to one or more of claims 3-21, characterised in that the double belt conveyor is flexible, so that the double belt can be directed up or down outside the stacker region.

## Revendications

1. Dispositif pour la mise sur palette de produits rectangulaires, en particulier de livres non reliés ou de livres, muni d'un dispositif d'approvisionnement (9) pour les produits, d'un dispositif pour la formation d'une rangée de produits et d'un dispositif pour la réception d'une couche de produits composée de plusieurs rangées de produits, ce dernier dispositif comportant un entraînement et pouvant être avancé de même que reculé, caractérisé en ce que le dispositif pour la réception d'une couche de produits comporte un tapis à rouleau simple ou un tapis à rouleau double (1), le tapis à rouleau double (1) comprenant un tapis supérieur (18) entraîné sans fin ainsi qu'un tapis inférieur (19) entraîné sans fin disposé directement sous le précédent et les tapis (18, 19) étant entraînés en sens inverse lors du recul de façon que les produits disposés sur le chemin supérieur (26) du tapis supérieur (18) et le chemin inférieur (27) du tapis inférieur (19) soient immobiles vis-à-vis du lieu d'empilage et que le tapis supérieur (18) au moins soit immobile durant l'avancement du tapis à rouleau double (1).

2. Dispositif selon la revendication 1, caractérisé en ce que, lors de l'avancement du tapis à rouleau double (1), le tapis inférieur (19) reste également immobile.

3. Dispositif selon la revendication 1 ou 2, caractérisé en ce que le tapis supérieur (18) du tapis à rouleau double (1) est entraîné sur un cylindre de renvoi (20) antérieur et sur un cylindre de renvoi (21) postérieur et en ce que le tapis inférieur (19) passe sur le cylindre de renvoi (23) antérieur et sur le cylindre de renvoi (24) postérieur, les cylindres (23, 24) étant disposés sous et entre les cylindres (20, 21), le chemin inférieur (27) du tapis inférieur (19) faisant une saillie vers le bas par rapport au chemin inférieur (25) ou encore le cylindre de renvoi (20) du tapis supérieur (18) et le cylindre (24) se trouvant à l'extérieur de la zone de longueur utile (14) du tapis à rouleau double (1).

4. Dispositif selon la revendication 3, caractérisé en ce que les tapis (18, 19) sont disposés l'un à l'intérieur de l'autre, le chemin inférieur (25) du tapis supérieur (18) étant pressé fortement par le chemin supérieur (28) du tapis inférieur (19) sur la longueur commune de ces chemins et le cylindre de renvoi d'avant (23) se trouvant juste derrière le cylindre de renvoi d'avant (20).

5. Dispositif selon la revendication 3 ou 4, caractérisé en ce que les cylindres de renvoi d'arrière (21, 24) ont diamètre plus important que celui des cylindres de renvoi d'avant (20, 23) et en ce que des cylindres de tension (30) sont subordonnés directement aux cylindres de renvoi d'arrière (21, 24), lesquels cylindres de tension (30) appuient chacun sous les chemins inférieurs (25, 27) et les dévient vers le haut.

6. Dispositif selon une ou plusieurs des revendications 3 à 5, caractérisé en ce qu'un profil de renvoi (29) est prévu à la place des cylindres de renvoi d'avant (20, 23), profil sur lequel sont entraînées des courroies étroites (30a, 31), les courroies (30a) formant le tapis supérieur (18) et les courroies (31) formant le tapis inférieur (19), les voies de guidage semi-circulaires des courroies (31) étant disposées en retrait et formant une marche de façon que les chemins inférieurs (27) des courroies (31) fassent saillie vers le bas par rapport

aux chemins inférieurs (25) des courroies (30a) ou encore les chemins supérieurs (26) par rapport aux chemins supérieurs (28).

7. Dispositif selon une ou plusieurs des revendications 3 à 6, caractérisé en ce que les cylindres de renvoi d'avant (20, 23) ou encore le profil de renvoi (29) de même que les cylindres (21, 24, 30) sont logés chacun latéralement dans un guide (32) où ils peuvent avancer et reculer, lesquels guides (32) supportent la structure du tapis à rouleau double (1).

8. Dispositif selon une ou plusieurs des revendications 1 à 7, caractérisé en ce que les cylindres de renvoi actionnés du tapis à rouleau double (1) comportent une roue libre et/ou un couplage (34) avec lequel ils sont reliés par l'intermédiaire de leur axe (35) de façon que lors du recul du tapis à rouleau double (1) les cylindres de renvoi soient actionnés et que lors de l'avancement du tapis à rouleau double (1) ils restent immobiles.

9. Dispositif selon la revendication 8, caractérisé en ce qu'une roue dentée (36) est assujettie à au moins une des extrémités latérales libres des axes (35) des cylindres de renvoi d'arrière (21, 24) et en ce que les roues dentées (36) coopèrent chacune avec un rail denté (37, 37 a) fixe et horizontal, lesquels rails sont par exemple logés dans les guides (32), le rail denté (37) étant disposé au-dessus de l'axe (35) du cylindre de renvoi d'arrière (21) et le rail denté (37 a) étant disposé sous l'axe (35) du cylindre de renvoi d'arrière (24), au moins une roue dentée (36) étant reliée à un entraînement, par exemple à l'arbre d'entraînement d'un moteur (38), les cylindres de renvoi d'avant (20, 21) ou encore le profil de renvoi (29) de même que les cylindres (23, 24 et 30) étant couplés les uns aux autres, avantageusement de façon rigide, de façon que leur écartement dans les guides (32) reste constant lors de l'avancement du tapis à rouleau double (1).

10. Dispositif selon une ou plusieurs des revendications 1 à 9, caractérisé en ce que le tapis à rouleau double (1) est disposé entre les chemins (5, 6) d'un tapis de transport (4) d'un bras d'empilage (2), pouvant être mû d'avant en arrière et de haut en bas.

11. Dispositif selon la revendication 10, caractérisé en ce que le bras d'empilage (2) est disposé contre des colonnes télescopiques (33) écartées l'une de l'autre, le long desquelles il peut être déplacé vers le haut et vers le bas et en ce que les colonnes télescopiques (33) sont situées au bord du tapis de transport (4), chacune au niveau de l'axe des cylindres de renvoi (7, 8).

12. Dispositif selon la revendication 11, caractérisé en ce que les axes des cylindres de renvoi (7, 8) sont logés par exemple dans des traverses contre lesquelles reposent également les guides (32) du tapis à rouleau double (1) et en ce que les traverses sont guidées vers le haut et vers le bas contre les colonnes télescopiques (33).

13. Dispositif selon une ou plusieurs des revendications 10 à 12, caractérisé en ce que des segments de colonne (33 b) sont enfichés dans les segments de colonne creux (33 a) des colonnes télescopiques (33) où ils peuvent être déplacés vers le haut et vers le bas et en ce que l'extrémité libre des segments de colonnes (33 b) comporte une poulie (33 c) tournant autour d'un axe horizontal sur laquelle passe une corde (33 d) ou une chaîne ou un moyen équivalent, laquelle est assujettie à une extrémité au segment de colonne creux (33 a) et à l'autre extrémité au bras d'empilage (2) par exemple à la traverse.

14. Dispositif selon la revendication 10, caractérisé en ce qu'une table élévatrice à parallélogramme articulé est placée juste en dessous du bras d'empilage (2), laquelle table porte le bras d'empilage (2) et le tapis à rouleau double (1).

15. Dispositif selon une ou plusieurs des revendications 10 à 14, caractérisé en ce qu'un poussoir (42) est disposé au-dessus du chemin supérieur (5) du tapis de transport (4) et s'étend dans la direction de la longueur du tapis, lequel poussoir est entraîné d'une façon connue en soi dans la direction de la flèche (43) vers l'avant et vers l'arrière et dans la direction de la flèche (44) vers le haut et vers le bas.

16. Dispositif selon la revendication 15, caractérisé en ce que un levier articulé (45) est prévu pour le recul et pour l'avancement du poussoir (42), lequel levier articulé prend appui à l'une de ses extrémités sur un endroit stable du bras d'empilage (2) et à son autre extrémité sur le poussoir (42), un moyen d'actionnement, par exemple un ensemble piston cylindre (47), agissant sur le membre (45) du levier articulé.

17. Dispositif selon une ou plusieurs des revendications 10 à 16, caractérisé en ce qu'un tapis d'approvisionnement (9) est placé devant le tapis de transport (4) et en ce qu'un mécanisme pour la commande de la vitesse des tapis et pour l'enregistrement d'un produit est placé entre le tapis d'approvisionnement (9) et le tapis de transport (4).

18. Dispositif selon la revendication 17, caractérisé en ce que le mécanisme de commande comprend une cellule photoélectrique (48).

19. Dispositif selon une ou plusieurs des revendications 10 à 18, caractérisé en ce qu'un butoir (49) déplaçable dans la direction de la flèche (50), avantageusement muni d'un dispositif d'amortissement, est disposé au niveau des deux cylindres de renvoi (8) transversalement au-dessus du chemin supérieur (5) du tapis de transport (4).

20. Dispositif selon une ou plusieurs des revendications 1 à 19, caractérisé en ce que le mécanisme à tapis à rouleau double se compose de pistes à roulettes.

21. Dispositif selon une ou plusieurs des revendications 1 à 20, caractérisé en ce que le mécanisme à tapis à rouleau double se compose de pistes à barres.

22. Dispositif selon une ou plusieurs des revendications 3 à 21, caractérisé en ce que le mécanisme à tapis à rouleau double a une conformation flexible de sorte que le tapis à rouleau double peut être incliné vers le haut ou vers le bas à l'extérieur du lieu d'empilage.

FIG.1

# FIG.2

# FIG.3

# FIG.4a

# FIG.4b